# EUROPÄISCHE PATENTSCHRIFT

(11) **EP 0 454 247 B1**
(45) Veröffentlichungstag und Bekanntmachung des Hinweises auf die Patenterteilung: **13.12.1995**
(21) Anmeldenummer: 91200950.3
(22) Anmeldetag: 22.04.1991
(51) Int. Cl.: H04Q 11/04, H04M 11/06

(54) **Anordnung im Teilnehmerbereich eines dienstintegrierten digitalen Nachrichtennetzes (ISDN) und eine Zwischeneinheit zur Anwendung in der Anordnung**
ISDN subscriber circuit and interface to be used therefor
Circuit d'abonné dans un réseau RNIS et dispositif d'interface à y utiliser

(30) Priorität: 27.04.1990 DE 4013478; 01.02.1991 DE 4103022
(43) Veröffentlichungstag der Anmeldung: 30.10.1991
(73) Patentinhaber: Philips Patentverwaltung GmbH, 22335 Hamburg (DE); Philips Electronics N.V., 5621 BA Eindhoven (NL)
(72) Erfinder: Schütz, Uwe, Dipl.-Ing., D-8501 Schwaig (DE)
(74) Vertreter: Peuckert, Hermann, Dipl.-Ing.

(56) Entgegenhaltungen:
- DE-A- 3 425 720
- DE-C- 3 431 420
- US-A- 4 891 813
- COMPUTER NETWORKS AND ISDN SYSTEMS. Bd. 18, Nr. 1, November 1989, AMSTERDAM NL Seiten 55 - 64; T-P LIN: 'ISDN Basic Rate Interface Architecture For ADPCM Transmission'
- PATENT ABSTRACTS OF JAPAN vol. 014, no. 259 (E-0937)5. Juni 1990 & JP-A-02 079 698
- COMPUTER COMMUNICATIONS. Bd. 11, Nr. 4, August 1988, GUILDFORD GB Seiten 197 - 202; D.R.DAVIES ET AL.: 'User-Network Interfaces'

## Beschreibung

Die Erfindung bezieht sich auf eine Anordnung im Teilnehmerbereich eines dienstintegrierten digitalen Nachrichtennetzes (ISDN) mit einer Netzabschlußeinheit, die einerseits mit einer Vermittlungsstelle und andererseits über eine Außenverbindung mit zwei Nutzkanälen mit einer Zwischeneinheit gekoppelt ist, die mit einer ersten Gruppe von Endgeräten über eine erste Innenverbindung mit zwei Nutzkanälen und wenigstens mit einer zweiten Gruppe von Endgeräten über eine zweite Innenverbindung mit zwei Nutzkanälen gekoppelt ist zum Durchführen vermittlungstechnischer Funktionen zwischen wenigstens einem Endgerät und einem externen Teilnehmer.

Das dienstintegrierte digitale Nachrichtennetz (ISDN) ermöglicht eine Vielzahl von Kommunikationsdiensten zwischen einheitlichen standardisierten Benutzerschnittstellen. Für die Übertragung schmalbandiger Nachrichten (Sprache, Daten- und Textkommunikation usw.) stehen zwei B-Kanäle mit jeweils einer Kapazität von 64 kbit/s zur Verfügung. Als Signalisierungskanal zur übertragung vermittlungstechnischer Informationen ist ein D-Kanal mit 16 kbit/s vorgesehen. Im Teilnehmerbereich eines dienstintegrierten digitalen Nachrichtennetzes ist eine Vermittlungsstelle über eine Schnittstelle am Referenzpunkt U mit einer ersten Netzabschlußeinheit, die eine Leitungsanpassung vornimmt, verbunden. Über eine Schnittstelle am Referenzpunkt T kann diese erste Netzabschlußeinheit mit einer zweiten Netzabschlußeinheit, die eine Vermittlungsfunktion haben kann, gekoppelt sein. Falls diese zweite Netzabschlußeinheit nicht vorhanden ist, ist die erste Netzabschlußeinheit über eine Sₒ-Schnittstelle, die dann gleich der Schnittstelle am Referenzpunkt T ist, mit Endgeräten verbunden. Im anderen Fall wäre die zweite Netzabschlußeinheit über die Sₒ-Schnittstelle an Endgeräte angeschlossen. Diese Endgeräte sind unter einer Rufnummer erreichbar.

Die zweite Netzabschlußeinheit kann als Nebenstellenanlage ausgebildet sein, die über mehrere Anschlüsse verfügt, an die jeweils mehrere Endgeräte anschließbar sind (siehe beispielsweise die Zeitschrift Elektronik-Technologie/Elektronik-Anwendungen/Elektronik-Marketing (eee), Nr. 6, vom 15. März 1988, Seiten 35 bis 41, insbesondere Figur a auf Seite 35). Einem Anschluß ist dabei eine bestimmte Rufnummer zugeordnet.

Soll eine Intern-Übertragung zwischen zwei Endgeräten eines Anschlusses hergestellt werden, so muß diese Intern-Übertragung, wenn keine Nebenstellenanlage vorhanden ist, über die Vermittlungsstelle abgewickelt werden. Hierdurch entstehen Gebühren. Zur Vermeidung einer Intern-Übertragung, die über die Vermittlungsstelle abgewickelt wird, wird in der EP-A-0 151 433 eine Gerätekonfiguration im Teilnehmerbereich eines dienstintegrierten digitalen Nachrichtennetzes vorgeschlagen, bei der über ein Fernsprechgerät weitere angeschlossene Endgeräte für eine vom Amtsverkehr unabhängige Intern-Übertragung vermittelt werden. Da für eine solche Übertragung die beiden Nutzkanäle (B-Kanäle) benötigt werden, kann kein weiteres Endgerät mit einem externen Teilnehmer eine Verbindung aufnehmen.

Bei Verwendung einer zweiten Netzabschlußeinheit als Nebenstellenanlage kann eine Intern-Übertragung von einem Anschluß (Nebenstelle) der Nebenstellenanlage zu einem anderen Anschluß (Nebenstelle) der Nebenstellenanlage ohne die Vermittlungsstelle und eine weitere Übertragung von einem Anschluß (Nebenstelle) der Nebenstellenanlage zu einem externen Teilnehmer realisiert werden. Es ist hierbei jedoch ebenfalls nicht möglich, eine Intern-Übertragung innerhalb eines Anschlusses (Nebenstelle) und gleichzeitig eine Extern-Übertragung von diesem Anschluß zu einem externen Teilnehmer aufzunehmen. Für die Vermittlungsstelle bzw. die Netzabschlußeineit sind mehrere durch die Nebenstellenanlage realisierte Anschlüsse vorhanden. Die Vermittlungsstelle bzw. die Netzanschlußeinheit sehen also in Richtung Nebenstellenanlage Endgeräte, die an mehrere Anschlüsse angeschlossen sind. Dabei können an einem Anschluß der Nebenstellenanlage - wie das beim ISDN vorgesehen ist - mehrere Endgeräte angelegt sein.

Es besteht auch die Möglichkeit, die Netzabschlußeinheit so auszubilden, daß sie ein Koppelfeld enthält, um zwischen verschiedenen Endgeräten eine Intern-Übertragung vorzunehmen. Dies ist aus der EP-A2-0 124 859 bekannt. In der Regel ist es jedoch nicht möglich, die Netzabschlußeinheit so auszubilden, daß eine Intern-Übertragung unter Umgehung der Vermittlungsstelle möglich ist, da dies die Betreibergesellschaften nicht vorgesehen haben und ein Eingriff in eine solche Netzabschlußeinheit nicht möglich ist. Die Netzabschlußeinheit ist einerseits über einen Anschluß mit einer Vermittlungsstelle und andererseits über mehrere Anschlüsse (Sₒ-Schnittstellen) mit jeweils wenigstens einem Endgerät verbunden. Für die Vermittlungsstelle sind also mehrere Anschlüsse vorhanden, d.h. ein externer Teilnehmer kann jeweils Teilnehmer nur eines bestimmten Anschlusses erreichen. Das die Vermittlung zwischen externem und internem Teilnehmer durchführende Koppelfeld, kann, wie oben erwähnt, auch eine Intern-Übertragung zwischen zwei Teilnehmern durchführen. Diese Vermittlungsfunktion zwischen internen Teilnehmern wird dabei von der Vermittlungstelle gesteuert. Möglich ist auch eine Intern-Übertragung zwischen zwei Teilnehmern eines Anschlusses. Jedoch ist dabei keine weitere Übertragung eines weiteren Teilnehmers eines solchen Anschlusses zu einem weiteren internen oder externen Teilnehmer möglich.

Des weiteren ist aus dem Dokument "PATENT ABSTRACTS OF JAPAN", Vol. 014, No. 259 (E-0937), 5. Juni 1990 & JP-A-02 079 698 (FUJITSU), eine Zwischeneinheit bekannt, die einen Internverkehr zwischen verschiedenen ISDN-End-geräten abwickelt.

Aus dem Dokument "COMPUTER NETWORKS AND ISDN SYSTEMS", Band 18, Nr. 1, November 1989, Amsterdam NL, Seiten 55 bis 64 (T-P LIN), ist noch eine Zwischeneinheit bekannt, die zwischen einer Vermittlungsstelle und einer ersten und zweiten Gruppe von Endgeräten angeordnet ist. Die erste Gruppe von Endgeräten ist über eine erste Innenverbindung und die zweite Gruppe von Endgeräten über eine zweite Innenverbindung mit der Zwischeneinheit gekoppelt. Die Zwischeneinheit dient zum Durchführen einer Vermittlung zwischen Endgeräten und externen Teilnehmern.

Der Erfindung liegt die Aufgabe zugrunde, eine Anordnung im Teilnehmerbereich eines dienstintegrierten digitalen Nachrichtennetzes (ISDN) zu schaffen, bei der mittels der Zwischeneinheit gleichzeitig wenigstens eine Intern-Übertragung zwischen Endgeräten und wenigstens eine Extern-Übertragung von einem Endgerät zu einem externen Teilnehmer unter Berücksichtigung verschiedener Signalisierungen hergestellt werden kann.

Diese Aufgabe wird bei einer Anordnung der eingangs genannten Art dadurch gelöst,
daß die Zwischeneinheit
- auch zum Durchführen vermittlungstechnischer Funktionen zwischen den Endgeräten,
- zum Übermitteln eines Verbindungswunschsignales an alle Endgeräte bei einem Verbindungswunsch eines internen oder externen Teilnehmers und
- bei einer unterschiedlichen Signalisierung zwischen dem zwei Nutzkanälen der Außenverbindung zugeordneten Signalisierungskanal und dem zwei Nutzkanälen einer Innenverbindung zugeordneten Signalisierungskanal zur Durchführung einer Signalisierungskonvertierung zur Anpassung der verschiedenen Signalisierungsarten zwischen Außen- und Innenverbindung geeignet ist.

Bei dieser Anordnung ist, um eine Intern-Übertragung zwischen zwei Endgeräten und zumindest eine Extern-Übertragung zwischen einem weiteren Endgerät und einem externen Teilnehmer vorzusehen, die Zwischeneinheit vorgesehen. Diese Zwischeneinheit ist zwischen der Netzabschlußeinheit und verschiedenen Endgeräten angeordnet. Die Zwischeneinheit ist mit der Netzabschlußeinheit über zwei Nutzkanäle und mit den Anschlüßen, an den verschiedene Endgeräte angeschlossen sind, über wenigstens zwei Innenverbindungen mit jeweils zwei Nutzkanälen verbunden. Hierdurch läßt sich einerseits eine Intern-Übertragung über zwei Nutzkanäle, die zur Zwischeneinheit führen, zwischen zwei Endgeräten und andererseits eine Extern-Übertragung von einem weiteren Endgerät über einen Nutzkanal und die Zwischeneinheit zu einem externen Teilnehmer ermöglichen. Des weiteren benötigen zwei Nutzkanäle zur Abwicklung vermittlungstechnischer Informationen noch einen zusätzlichen Signalisierungskanal mit geringerer Kapazität. Bei vier Nutzkanälen ist es auch möglich, zwei Intern-Übertragungen oder zwei Extern-Übertragungen und eine zusätzliche Intern-Übertragung zu realisieren. Von der Vermittlungsstelle bzw. Zwischeneinheit werden die Endgeräte als an einem Anschluß liegend aufgefaßt, da ein Verbindungswunsch an alle Endgeräte mittels eines Verbindungswunschsignals übertragen wird. Die Zwischeneinheit ermöglicht jedoch eine Realsierung von mindestens zwei Anschlüssen, an die jeweils Endgeräte anschließbar sind. An einem ersten Anschluß ist dabei eine erste Gruppe von Endgeräten und an wenigstens einen zweiten Anschluß eine zweite Gruppe von Endgeräten angeschlossen. Es können beliebig viele weitere Anschlüsse an der Endgeräte-Seite der Zwischeneinheit aufgebaut werden. Durch die erfindungsgemäße Anordnung wird also die Netzabschlußeinheit nicht verändert und es ist auch nicht erforderlich eine Nebenstellenanlage für Intern-Übertragungen zu installieren.

Die Signalisierung im Signalisierungskanal einer Verbindung im ISDN in der Bundesrepublik Deutschland unterscheidet sich gegenüber der Signalisierung im Signalisierungkanal anderer ISDN-Länder. Um hierbei eine Konvertierung, beispielsweise zur deutschen Signalisierung, durchführen zu können, ist eine Signalisierungskonvertierung zur Anpassung der verschiedenen Signalisierungsarten zwischen Außen- und Innenverbindung vorgesehen.

Bei einem Ruf von einem externen Teilnehmer, der kein spezielles Endgerät anruft, d.h. keine Endgeräteauswahlziffer hinzufügt, werden alle Endgeräte angerufen. Ein Verbindungsaufbau wird jedoch nur mit demjenigen Endgerät hergestellt, welches als erstes den Ruf in Empfang nimmt, z.B. den Telefonhörer abnimmt, wenn das Endgerät ein Telefon ist. Hierbei ist also vorgesehen, daß bei einem Verbindungswunsch eines externen Teilnehmers an alle Endgeräte die Zwischeneinheit angeordnet ist zum Herstellen einer Verbindung zwischen dem externen Teilnehmer und demjenigen Endgerät, welches zuerst ein Rufannahmesignal aussendet.

In einer Weiterbildung der Erfindung ist vorgesehen, daß die Zwischeneinheit über eine Außenverbindung mit zwei Nutzkanälen mit der Netzabschlußeinheit und über zwei Innenverbindungen mit jeweils zwei Nutzknälen mit dem Anschluß gekoppelt ist, daß in der Zwischeneinheit die Innenverbindung und die Außenverbindung über jeweils eine Anpassungseinheit mit einem Koppelfeld zur Kopplung der Nutzkanäle gekoppelt sind und daß es eine in der Zwischeneinheit enthaltene Steuerschaltung gibt zum Steuern der Anpassungsschaltungen und des Koppelfeldes. Die Steuerschaltung kann hierbei ein Mikroprozessor sein.

Die Steuerschaltung ist ferner noch zur Signalisierungskonvertierung zur Anpassung der verschiedenen Signalisierungsarten zwischen Außen- und Innenverbindung vorgesehen.

Die Erfindung bezieht sich weiter auf eine Zwischeneinheit gemäß Anspruch 5 zur Anwendung in der Anordnung gemäß Anspruch 1.

Ein Ausführungsbeispiel der Erfindung wird nachstehend anhand der Zeichnungen näher erläutert.

Es zeigen:
Fig. 1 eine Anordnung im Teilnehmerbereich eines dienstintegrierten digitalen Nachrichtennetzes (ISDN) und
Fig. 2 eine Ausführungsform einer in Fig. 1 verwendeten Zwischeneinheit.

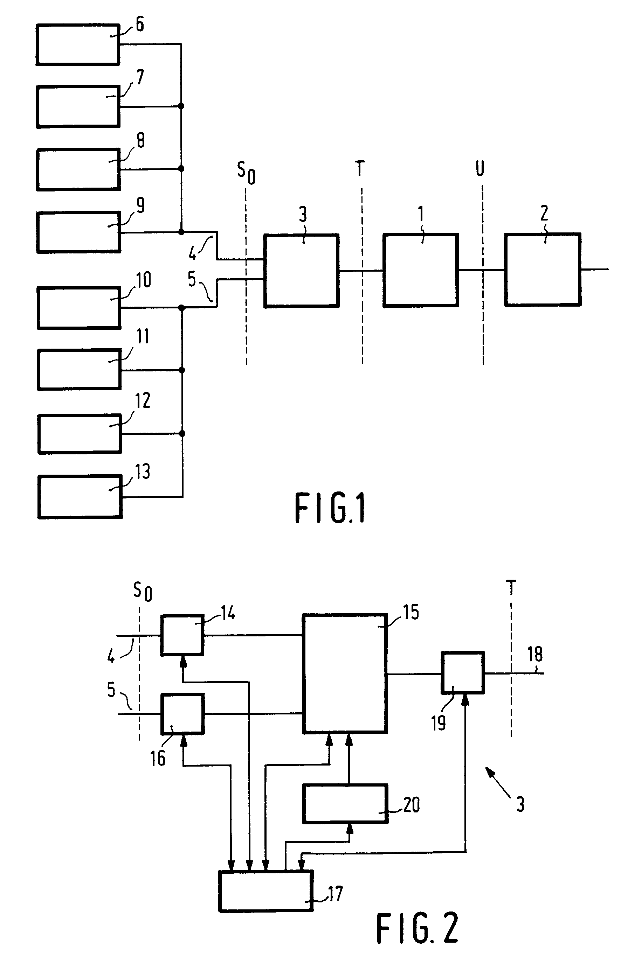

Die in Fig. 1 dargestellte Anordnung im Teilnehmerbereich eines dienstintegrierten digitalen Nachrichtennetzes (ISDN) enthält eine Netzabschlußeinheit 1, die an einer Schnittstelle am Referenzpunkt U mit einer Vermittlungsstelle 2 verbunden ist. An die Netzabschlußeinheit 1 ist über eine Schnittstelle am Referenzpunkt T eine Zwischeneinheit 3 angeschlossen; diese ist über zwei Innenverbindungen 4 und 5 (Sₒ-Schnittstelle) mit jeweils vier Endgeräten 6 bis 13, beispielsweise Fernsprechapparate oder Terminals, verbunden. Die Innenverbindung 4 ist dabei mit den Endgeräten 6 bis 9 und die Innenverbindung 5 mit den Endgeräten 10 bis 13 gekoppelt.

Für die Informationsübertragung stehen jeder Verbindung 4 und 5 jeweils zwei Nutzkanäle (B-Kanäle) mit jeweils 64 kbit/s zur Verfügung. Als Signalisierungskanal zur Übertragung vermittlungstechnischer Informationen ist für jede Verbindung 4 und 5 ein D-Kanal mit 16 kbit/s vorgesehen.

Ein Ausführungsbeispiel der Zwischeneinheit 3 ist in Fig. 2 dargestellt. Die Innenverbindung 4 ist über eine Anpassungseinheit 14 mit einem Koppelfeld 15 und die Innenverbindung 5 über eine Anpassungseinheit 16 mit dem Koppelfeld 15 verbunden. Gesteuert werden die Anpassungseinheiten 14 und 16 und das Koppelfeld 15 von einer Steuerschaltung 17, die einen Mikroprozessor enthalten kann.

Eine Außenverbindung 18, die von der Netzabschlußeinheit 1 über die Schnittstelle am Referenzpunkt T zur Zwischeneinheit 3 führt, ist mit einer weiteren Anpassungseinheit 19 verbunden. Diese Anpassungseinheit 19 wird ebenfalls von der Steuerschaltung 17 gesteuert. Von der Anpassungseinheit 19 führt eine Verbindung zum Koppelfeld 15. Als Anpassungseinheiten 14, 16 und 19 kann beispielsweise die integrierte Schaltung PEB 2080/81 von Siemens verwendet werden. Zur Erzeugung von Hörtönen ist noch ein Tongenerator 20 vorgesehen, der an das Koppelfeld 15 angeschlossen ist und von der Steuerschaltung 17 gesteuert wird.

Mittels der Zwischeneinheit 3 können nun mindestens zwei Intern-Übertragungen zwischen Endgeräten aufgebaut werden oder eine Intern-Übertragung zwischen zwei Endgeräten und zumindest eine Extern-Übertragung von einem Endgerät zu einem externen Teilnehmer. Beispielsweise kann ein B-Kanal der Innenverbindung 4 und ein B-Kanal der Innenverbindung 5 zum Aufbau einer Intern-Übertragung von dem Endgerät 6 zu dem Endgerät 12 realisiert werden. Das Koppelfeld 15 dient dabei zur Kopplung der beiden Kanäle der Innenverbindungen 4 und 5. Gleichzeitig kann eine Intern-Übertragung über die weiteren B-Kanäle der Innenverbindungen 4 und 5, z.B. zwischen den Endgeräten 8 und 13, aufgebaut werden. Es ist aber auch möglich, eine Intern-Übertragung beispielsweise zwischen den Endgeräten 6 und 12 und zumindest eine externe Übertragung, beispielsweise von dem Endgerät 13 über den B-Kanal der Verbindung 5 zu einem externen Teilnehmer aufzubauen. Beispielsweise läßt sich auch eine Intern-Übertragung zwischen den Endgeräten 10 und 11 durchführen. Es lassen sich also entweder zwei Intern-Übertragungen oder eine Intern-Übertragung und zwei Extern-Übertragungen oder nur zwei Extern-Übertragungen realisieren.

Die Endgeräte 6 bis 13 können mittels einer Kennzeichennummer durch einen externen Teilnehmer erreichbar sein. Es ist aber auch möglich, einzelne Endgeräte 6 bis 13 durch eine zusätzliche angefügte Zahl zur Kennzeichennummer zu erreichen.

Im folgenden wird der Aufbau verschiedener Verbindungen erläutert. Bei einem abgehenden Ruf von einem Endgerät, z.B. 12, wird über den D-Kanal ein Verbindungswunschsignal geliefert, welches über die Anpassungseinheit 16 der Steuerschaltung 17 zugeführt wird. Die Steuerschaltung 17 teilt dem Endgerät 12 einen B-Kanal zu, gibt über den B-Kanal einen Wählton vom Tongenerator 20 aus und sendet dem Endgerät 12 ein Quittierungssignal, woraufhin das Endgerät 12 Informationssignale über den D-Kanal sendet, welches die Rufnummer beinhaltet. Im folgenden ist ein Verbindungsaufbau zwischen einem internen und einem externen Teilnehmer als Empfänger zu unterscheiden.

Wird die Verbindung mit einem externen Teilnehmer gewünscht, sendet die Steuerschaltung 17 über die Anpassungseinheit 19 und über den D-Kanal der Netzabschlußeinheit 1 der Vermittlungsstelle 2 ein Verbindungswunschsignal. Die Vermittlungsstelle übermittelt der Steuerschaltung 17 ein Quittierungssignal, woraufhin die Steuerschaltung 17 der Vermittlungsstelle 2 die Rufnummer in Informationssignalen mitteilt. Der von der Steuerschaltung 17 zugeteilte B-Kanal für das Endgerät 12 wird gleichzeitig auf den von der Vermittlungsstelle 2 zugeteilten B-Kanal geschaltet. Bei Rufaufnahme des Teilnehmers wird von der Vermittlungsstelle 2 über den D-Kanal ein Rufannahmesignal über die Steuerschaltung 17 der Zwischeneinheit 3 dem Endgerät 12 zugeführt. Damit ist der Verbindungsaufbau abgeschlossen.

Wird die Verbindung mit einem internen Teilnehmer, beispielsweise mit dem Endgerät 8, gewünscht, wird von der Steuerschaltung 17 nach Erhalt der Informationssignale von dem Endgerät 12 ein Verbindungswunschsignal über die D-Kanäle beider Innenverbindungen 4 und 5 gesendet. Das Verbindungswunschsignal enthält die Rufnummer des Endgerätes 8. Das Endgerät 8 antwortet über den D-Kanal mit einem Bereitschaftssignal. Ist das Endgerät 8 ein Fernsprechapparat, wird bei Rufannahme, z.B. Abnahme des Hörers, ein Rufannahmesignal übertragen. Die Steuerschaltung 17 wird daraufhin zum Endgerät 12 (rufender Teilnehmer) ein Verbindungsaufnahmesignal und zum Endgerät 8 (gerufenener Teilnehmer) ein Bestätigungssignal senden.

Bei einem ankommenden Ruf von einem externen Teilnehmer wird der Steuerschaltung 17 über den D-Kanal der Außenverbindung 18 und der Anpassungseinheit 19 ein Verbindungswunschsignal zugeführt. Die Steuerschaltung 17 sendet daraufhin ein Verbindungswunschsignal über beide Anpassungseinheiten 14 und 16 in beiden D-Kanälen der Innenverbindungen 4 und 5 an alle Endgeräte 6 bis 13. Enthält das Verbindungswunschsignal keine Endgerätenummer, d.h. es sind alle kompatiblen Endgeräte 8 bis 13 angesprochen, so wird ein Bereitschaftssignal zur Steuerschaltung 17 von jedem kompatiblen Endgerät 6 bis 13 gemeldet. Sobald ein interner Teilnehmer, beispielsweise durch Abnehmen eines Hörers, die Verbindung aufnimmt, wird von diesem Endgerät 9 der Steuerschaltung 17 ein Rufannahmesignal geliefert. Über die Anpassungsschaltung 14 wird von der Steuerschaltung 17 dem Endgerät 9 ein Bestätigungssignal und von den anderen Endgeräten 6 bis 8 und 10 bis 13 ein Abweisungssignal zugeführt. Das Rufannahmesignal wird weiter von der Zwischeneinheit 3 zur Vermittlungsstelle 2 über den D-Kanal der Außenverbindung 18 übertragen. Danach wird zur Informationsübertragung ein B-Kanal der Innenverbindung 4 mit einem B-Kanal der Außenverbindung 18 gekoppelt.

Um eine Anpassung der D-Kanal-Signalisierung zwischen der Signalisierung im D-Kanal der Innenverbindungen 4 und 5 und der Signalisierung im D-Kanal der Außenverbindung 18 durchführen zu können, ist in der Steuerschaltung 17 eine Signalisierungskonvertierung vorgesehen, die z.B. mittels einer Speichertabelle vorgenommen werden kann.

Es sei noch erwähnt, daß die in den Figuren dargestellten Leitungen aus Gründen der Übersichtlichkeit in Form einer Leitung gezeichnet sind, obwohl sie häufig aus mehreren parallelen, bidirektionalen Leitungen bestehen. Auch die für die Steuerung der einzelnen digitalen Schaltungselemente erforderlichen Taktleitungen und Taktgeneratoren sind nicht dargestellt.

## Patentansprüche

1. Anordnung im Teilnehmerbereich eines dienstintegrierten digitalen Nachrichtennetzes (ISDN) mit einer Netzabschlußeinheit (1), die einerseits mit einer Vermittlungsstelle (2) und andererseits über eine Außenverbindung mit zwei Nutzkanälen mit einer Zwischeneinheit gekoppelt ist, die mit einer ersten Gruppe von Endgeräten (6 bis 9) über eine erste Innenverbindung (4) mit zwei Nutzkanälen und wenigstens mit einer zweiten Gruppe von Endgeräten (10 bis 13) über eine zweite Innenverbindung mit zwei Nutzkanälen gekoppelt ist zum Durchführen vermittlungstechnischer Funktionen zwischen wenigstens einem Endgerät (6 bis 13) und einem externen Teilnehmer,
dadurch gekennzeichnet,
daß die Zwischeneinheit (3)
- auch zum Durchführen vermittlungstechnischer Funktionen zwischen den Endgeräten (6 bis 13),
- zum Übermitteln eines Verbindungswunschsignales an alle Endgeräte (6 bis 13) bei einem Verbindungswunsch eines internen oder externen Teilnehmers und
- bei einer unterschiedlichen Signalisierung zwischen dem zwei Nutzkanälen der Außenverbindung (18) zugeordneten Signalisierungskanal und dem zwei Nutzkanälen einer Innenverbindung (4, 5) zugeordneten Signalisierungskanal zur Durchführung einer Signalisierungskonvertierung zur Anpassung der verschiedenen Signalisierungsarten zwischen Außen- und Innenverbindung (18; 4, 5) geeignet ist.

2. Anordnung nach Anspruch 1,
dadurch gekennzeichnet,
daß bei einem Verbindungswunsch eines externen Teilnehmers an alle Endgeräte (6 bis 13) die Zwischeneinheit (3) angeordnet ist zum Herstellen einer Verbindung zwischen dem externen Teilnehmer und demjenigen Endgerät, welches zuerst ein Rufannahmesignal aussendet.

3. Anordnung nach Anspruch 2,
dadurch gekennzeichnet,
daß in der Zwischeneinheit die Innenverbindungen und die Außenverbindung über jeweils eine Anpassungseinheit (14, 16, 19) mit einem Koppelfeld (15) zur Kopplung der Nutzkanäle gekoppelt sind und daß es eine in der Zwischeneinheit enthaltene Steuerschaltung (17) gibt zum Steuern der Anpassungsschaltungen und des Koppelfeldes.

4. Anordnung nach Anspruch 3,
dadurch gekennzeichnet,
daß die Steuerschaltung (17) zur Durchführung der Signalisierungskonvertierung zur Anpassung der verschiedenen Signalisierungsarten zwischen Außen- und Innenverbindungen (18; 4, 5) geeignet ist.

5. Zwischeneinheit für eine Anordnung im Teilnehmerbereich eines dienstintegrierten digitalen Nachrichtennetzes (ISDN), die über eine Außenverbindung mit zwei Nutzkanälen und eine Netzabschlußeinheit (1) mit einer Vermittlungsstelle (2) koppelbar ist und die mit einer ersten Gruppe von Endgeräten (6 bis 9) über eine erste Innenverbindung (4) mit zwei Nutzkanälen und wenigstens mit einer zweiten Gruppe von Endgeräten (10 bis 13) über eine zweite Innenverbindung mit zwei Nutzkanälen koppelbar ist zum Durchführen vermittlungstechnischer Funktionen zwischen wenigstens einem Endgerät (6 bis 13) und einem externen Teilnehmer,
dadurch gekennzeichnet,
daß die Zwischeneinheit (3)
- auch zum Durchführen vermittlungstechnischer Funktionen zwischen den Endgeräten (6 bis 13),
- zum Übermitteln eines Verbindungswunschsignales an alle Endgeräte (6 bis 13) bei einem Verbindungswunsch eines internen oder externen Teilnehmers und
- bei einer unterschiedlichen Signalisierung zwischen dem zwei Nutzkanälen der Außenverbindung (18) zugeordneten Signalisierungskanal und dem zwei Nutzkanälen einer Innenverbindung (4, 5) zugeordneten Signalisierungskanal zur Durchführung einer Signalisierungskonvertierung zur Anpassung der verschiedenen Signalisierungsarten zwischen Außen- und Innenverbindung (18; 4, 5) geeignet ist.

## Claims

1. Arrangement in the subscriber area of an integrated services digital network (ISDN) comprising a network terminal (1) which is coupled, on one side, to an exchange (2) and, on the other, *via* an external line having two traffic channels, to an interface which is coupled to a first group of network terminals (6 to 9) *via* a first internal line (4) having two traffic channels and at least a second group of network terminals (10 to 13) *via* a second internal line having two traffic channels, for performing switch functions between at least a network terminal (6 to 13) and an external subscriber, characterized in that the interface (3)
- can also be used for performing switch functions between the terminal devices (6 to 13),
- can be used for switching a connection request signal to all the terminal devices (6 to 13) when a request for a connection arrives from an internal or external user, and
- when there is different signalling between the signalling channel to which are assigned two traffic channels of the external line (18) and the signalling channel to which are assigned two traffic channels of an internal line (4, 5) for performing a conversion of signalling to adapt the different types of signalling of external and internal lines (18; 4, 5).

2. Arrangement as claimed in Claim 1, characterized in that when there is a connection request from an external subscriber to all terminal devices (6 to 13), the interface (3) is arranged for establishing a connection between the external subscriber and the terminal device that transmits a call accept signal first.

3. Arrangement as claimed in Claim 2, characterized in that in the interface the internal lines and the external line are coupled each *via* an adapting element (14, 16, 19) to a switching network (15) for switching the traffic channels, and in that the interface comprises a control circuit (17) for controlling the adapting elements and the switching network.

4. Arrangement as claimed in Claim 3, characterized in that the control circuit (17) is suitable for converting the signalling to adapt the different types of signalization between external and internal lines (18; 4, 5).

5. Interface to be used in an arrangement in the subscriber area of an integrated services digital network (ISDN), which can be coupled, *via* an external line having two traffic channels, and a network terminal (1) to an exchange (2) and which can be coupled to a first group of network terminals (6 to 9) *via* a first internal line (4) having two traffic channels and at least a second group of network terminals (10 to 13) *via* a second internal line having two traffic channels, for performing switch functions between at least a network terminal (6 to 13) and an external subscriber, characterized in that the interface (3)
- can also be used for performing switch functions between the terminal devices (6 to 13),
- can be used for switching a connection request signal to all the terminal devices (6 to 13) when a request for a connection arrives from an internal or external user, and
- when there is different signalling between the signalling channel to which are assigned two traffic channels of the external line (18) and the signalling channel to which are assigned two traffic channels of an internal line (4, 5) for performing a conversion of signalling to adapt the different types of signalling of external and internal lines (18; 4, 5).

## Revendications

1. Circuit d'abonné dans un réseau RNIS comportant une unité de terminaison de réseau (1), qui est couplée, d'une part, à un centre de commutation (2), et, d'autre part, via une liaison externe équipée de deux canaux utiles, à une unité intermédiaire, qui peut être couplée à un premier groupe de postes terminaux (6 à 9) via une première liaison interne (4) équipée de deux canaux utiles et au moins à un deuxième groupe de postes terminaux (10 à 13) via une deuxième liaison interne équipée de deux canaux utiles pour exécuter des fonctions de technique de commutation entre au moins un poste terminal (6 à 13) et un abonné externe, caractérisé en ce que l'unité intermédiaire (3) convient
- également pour l'exécution de fonctions de technique de commutation entre les postes terminaux (6 à 13);
- pour le transfert d'un signal d'intention d'appel à tous les postes terminaux (6 à 13) lors d'une intention d'appel d'un abonné interne ou externe, et
- pour l'exécution, lors d'une signalisation différente entre le canal de signalisation affecté à deux canaux utiles de la liaison externe (18) et le canal de signalisation affecté à deux canaux utiles d'une liaison interne (4, 5), d'une conversion de signalisation afin d'adapter les divers types de signalisation entre la liaison externe et la liaison interne (18; 4, 5).

2. Circuit d'abonné selon la revendication 1, caractérisé en ce que, lors d'une intention d'appel d'un abonné externe à destination de tous les postes terminaux (6 à 13), l'unité intermédiaire (3) est agencée pour établir une liaison entre l'abonné externe et le poste terminal qui envoie le premier un signal d'acceptation d'appel.

3. Circuit d'abonné selon la revendication 2, caractérisé en ce que, dans l'unité intermédiaire, les liaisons internes et la liaison externe sont couplées respectivement via une unité d'adaptation (14, 16, 19) à un réseau de connexion (15) afin de coupler les canaux utiles et qu'il y a un circuit de commande (17) contenu dans l'unité intermédiaire pour commander les circuits d'adaptation et le réseau de connexion.

4. Circuit d'abonné selon la revendication 3, caractérisé en ce que le circuit de commande (17) convient pour effectuer la conversion de signalisation afin d'adapter les divers types de signalisation entre la liaison externe et la liaison interne (18; 4, 5).

5. Unité intermédiaire pour un circuit d'abonné dans un réseau RNIS qui peut être couplée via une liaison externe comportant deux canaux utiles et une unité de fermeture de réseau (1), à un centre de commutation (2), et qui peut être couplée, à un premier groupe de postes terminaux (6 à 9) via une première liaison interne (4) équipée de deux canaux utiles et au moins à un deuxième groupe de postes terminaux (10 à 13) via une deuxième liaison interne équipée de deux canaux utiles pour exécuter des fonctions de technique de commutation entre au moins un poste terminal (6 à 13) et un abonné externe, caractérisée en ce que l'unité intermédiaire (3) convient
- également à l'exécution de fonctions de technique de commutation entre les postes terminaux (6 à 13);
- pour le transfert d'un signal d'intention d'appel à tous les postes terminaux (6 à 13) lors d'une intention d'appel d'un abonné interne ou externe, et
- pour la réalisation, lors d'une signalisation différente entre le canal de signalisation affecté à deux canaux utiles de la liaison externe (18) et le canal de signalisation affecté à deux canaux utiles d'une liaison interne (4, 5), d'une conversion de signalisation afin d'adapter les divers types de signalisation entre la liaison externe et la liaison interne (18; 4, 5).
